# EUROPEAN PATENT APPLICATION

(11) **EP 1 270 170 A1**
(43) Date of publication of application: **02.01.2003**
(21) Application number: 01305334.3
(22) Date of filing: 19.06.2001
(51) Int. Cl.: B29C 45/34, B29C 33/10

(54) **Mold vent**

(71) Applicant: VALIANT CORPORATION, Windsor, Ontario N8N 5A8 (CA)
(72) Inventor: Noestheden, Andrew, Tecumseh, Ontario (CA); Naysmith, Peter, Allen Park, MI 48101 (US); Iandolo, Carlo, Lasalle, Ontario (CA)
(74) Representative: Shelley, Mark Raymond

(57) **Abstract**

A mold vent (30) is disclosed for use with a mold (32) having a mold cavity (34) adapted to receive a flowable molding material. The mold vent includes a generally planar disk (38) in which the disk has two spaced apart and planar sides (40, 42). A plurality of openings (44) extend between the sides of the planar disk. These openings are sufficiently large to permit gases to flow freely from the mold cavity through the mold vent and yet small enough to still maintain the molding material in the mold cavity. In one embodiment, these openings consist of spaced apart and parallel slots formed through the disk by laser cutting.

## Description

The present invention relates generally to molding and, more particularly, to an improved mold vent.

In a molding operation, a flowable material is typically introduced into a mold cavity. Any number of different means, such as injection molding, are used to fill the mold cavity with the flowable molding material.

In many situations, gases are formed within the mold cavity when the flowable material is introduced into the mold cavity. In order to exhaust the gases from the mold cavity during the molding operation so that the molding material conforms to the shape of the mold cavity, it has been the previously known practice to provide one or more mold vents to vent the mold cavity through passageways formed in the mold.

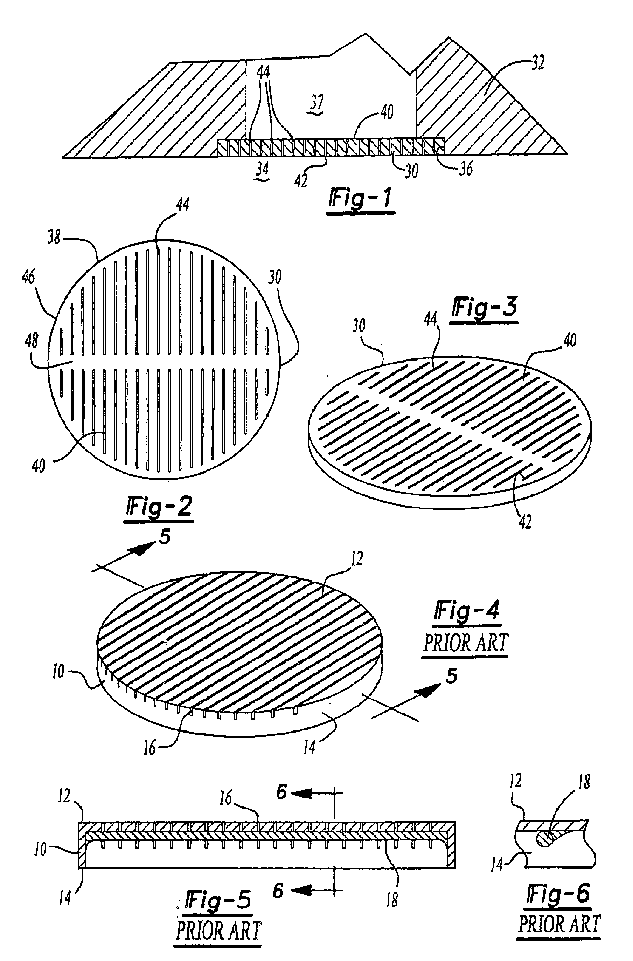

A typical prior art mold vent 10 is illustrated in FIGS. 4-6 of the patent drawing. A prior art mold vent 10 typically comprises a circular plate 12 having an annular rim 14 formed around its outer periphery. Typically, both the plate 12 as well as the rim 14 are machined from a single piece of metal.

After the metal is machined to form the annular rim 14 and plate 12, a circular saw is then utilized to cut spaced apart and parallel slots 16 through both the plate 12 as well as one end of the rim 14. Furthermore, since the slots 16 cut by the saw extend through one end of the rim 14, it is necessary that a portion of the rim 14 protrude outwardly from one side of the plate 12. Otherwise, the mold vent 10 would fall apart after the sawing operation.

As best shown in FIGS. 5 and 6, in many cases, it is necessary to reinforce the center of the mold vent 10 in order to prevent deflection of the plate 12 during the molding operation. Consequently, in many situations, a reinforcing rod 18 is welded to one side of the plate 12. The rod 18 as well as the welding operation necessarily increases the overall cost of the mold vent 10.

The previously known mold vents are disadvantageous in that they are relatively expensive due to the extensive machining. This machining includes not only machining a metal workpiece to form the plate 12 and rim 14, but also the sawing operation to form the slots 16 and, if required, the welding operation for the reinforcing rod 18. Furthermore, since the molding vents 10 must be frequently replaced in the mold, the cost of the molding vents contributes significantly to the overall cost of the molding operation.

The present invention provides a mold vent which overcomes all of the above-mentioned disadvantages of the previously known mold vents.

In brief, an aspect of the mold vent of the present invention comprises a generally planar disk which is preferably circular in shape. The disk is formed from flat stock, such as sheet metal, and thus has two spaced apart and parallel planar sides.

The disk includes a plurality of openings which terminate at a position spaced inwardly from an outer periphery of the disk. Preferably, these openings are formed by laser cutting and are preferably in the form of parallel slots formed through the disk.

The openings, furthermore, are dimensioned so that they are sufficiently large to permit gases to freely flow through the mold vent from the interior of the mold cavity and yet sufficiently small so that the openings prevent the molding material from passing through the mold vent.

For larger mold vents, preferably an unslotted portion is provided transversely across the disk. This unslotted portion thus forms a reinforcement for the disk.

Since the disk is machined from flat stock, the mold vent of the present invention is much more inexpensive than the previously known machined mold vents.

Various embodiments of the invention will now be more particularly described, by way of example, and with reference to the accompanying drawings; in which:
FIG. 1 is a fragmentary sectional view illustrating a preferred embodiment of the present invention;
FIG. 2 is a plan view illustrating the preferred embodiment of the present invention;
FIG. 3 is an elevational view illustrating a preferred embodiment of the present invention;
FIG. 4 is an elevational view of a prior art mold vent;
FIG. 5 is a sectional view taken substantially along line 5-5 in FIG. 4; and
FIG. 6 is a fragmentary sectional view taken substantially along line 6-6 in FIG. 5.

With reference to FIGS. 1-3, a preferred embodiment of the mold vent 30 of the present invention is there shown for use with a mold 32 having a mold cavity 34. As shown in FIG. 1, the mold vent 30 is positioned within a recess 36 in the mold 32 so that the mold vent 30 registers with a vent passageway 37 formed in the mold 32.

The mold vent 30 comprises a disk 38 which is preferably circular in shape. The disk 38, furthermore, is manufactured from flat stock, such as sheet metal, so that the disk 38 has two planar sides 40 and 42 which are spaced apart and parallel to each other. Any conventional manufacturing method, such as stamping or laser cutting, may be used to form the disk 38 from the flat stock.

The mold vent 30 further includes a plurality of openings 44 which extend through the disk 38 between its opposite sides 40 and 42. As illustrated in the drawing, these openings 44 preferably comprise slots that are parallel and spaced apart from each other. However, openings of other shapes as well as other patterns may be utilized without deviation from the spirit or scope of the invention.

The openings 44 are preferably formed through the disk 38 by laser cutting although other means, such as EDM, water jet or the like, may alternatively be used. Furthermore, the slots 44 are dimensioned such that they are sufficiently large to permit gases to freely flow through the mold vent 40 and out through the passageway 38 (FIG. 1) but sufficiently small to prevent the moldable material in the mold cavity 34 from flowing through the openings 44.

As best shown in FIG. 2, the openings 44 all terminate short of an outer periphery 46 of the disk 38 so that the outer periphery 46 of the disk 38 maintains the structural integrity of the mold vent 40. Furthermore, if desired, a transversely extending unslotted portion 48 may be provided across the disk 38 to act as a reinforcing rib for the mold vent 40.

From the foregoing, it can be seen that the present invention provides an improved mold vent for use in molding operations. Since the mold vent of the present invention is machined from flat stock, it may be much more inexpensively manufactured than the previously known mold vents.

Having described my invention, however, many modifications thereto will become apparent to those skilled in the art to which it pertains without deviation from the spirit of the invention as defined by the scope of the appended claims.

## Claims

1. A mold vent for use with a mold having a mold cavity adapted to receive a flowable molding material comprising
a generally planar disk, said disk having two spaced apart planar sides, said disk having a plurality of openings extending between said planar sides, said openings dimensioned sufficiently large to permit gases to flow from the mold cavity and through the openings and sufficiently small to still maintain the molding material in the mold cavity, said openings terminating at a position spaced inwardly from an outer periphery of the disk.

2. The invention as defined in claim 1 wherein said openings comprise a plurality of slots.

3. The invention as defined in claim 2 wherein said slots are spaced apart and parallel to each other.

4. The invention as defined in claim 2 or claim 3 wherein said disk includes an unslotted portion extending transversely across said disk.

5. The invention as defined in any preceding claim wherein said disk is circular in shape.

6. The invention as defined in any preceding claim wherein said disk is manufactured from flat sheet metal.

7. The invention as defined in any preceding claim wherein said openings are formed by laser cutting.
